# FASCICULE DE BREVET EUROPEEN

(11) **EP 1 140 592 B1**
(45) Date de publication et mention de la délivrance du brevet: **06.04.2005**
(21) Numéro de dépôt: 99961095.9
(22) Date de dépôt: 15.12.1999
(51) Int. Cl.: B60S 1/40

(54) **ESSUIE-GLACE DE VEHICULE AUTOMOBILE COMPORTANT DES MOYENS PERFECTIONNES D'ARTICULATION DU BALAI SUR LE BRAS D'ESSUIE-GLACE**
KRAFTFAHZEUGSCHEIBENWISCHER MIT EINER VERBESSERTEN GELENKVERBINDUNG ZWISCHEN DEM WISCHERBLATT UND DEM WISCHERARM
WINDSHIELD WIPER FOR AN AUTOMOBILE COMPRISING ADVANCED MEANS FOR ARTICULATING THE WIPER BLADE ON SAID WINDSHIELD WIPER

(30) Priorité: 30.12.1998 FR 9816616
(43) Date de publication de la demande: 10.10.2001
(73) Titulaire: VALEO SYSTEMES D'ESSUYAGE, 78321 La Verrière (FR)
(72) Inventeur: JARASSON, Jean-Michel, F-77500 Chelles (FR)
(86) Numéro de dépôt international: PCT/FR1999/003169
(87) Numéro de publication internationale: WO 2000/040444

(56) Documents cités:
- EP-A- 0 231 129
- FR-A- 2 453 757
- FR-A- 2 759 048
- US-A- 4 896 987

## Description

L'invention concerne un essuie-glace de véhicule automobile comportant des moyens perfectionnés d'articulation d'un balai d'essuie-glace sur un bras d'essuie-glace.

L'invention concerne plus particulièrement un essuie-glace de véhicule automobile, du type dans lequel un balai d'essuie-glace est articulé à l'extrémité longitudinale avant d'un bras d'essuie-glace, autour d'un axe transversal horizontal, par l'intermédiaire d'un connecteur qui est articulé sur le balai.

Selon une conception connue du montage articulé d'un balai à l'extrémité d'un bras, le connecteur est emboîté élastiquement selon la direction radiale sur une tige d'articulation du balai et l'extrémité avant du bras est recourbée longitudinalement pour former un crochet dans lequel le connecteur, une fois monté sur le balai, doit être engagé longitudinalement d'arrière en avant.

Pour des raisons de rigidité et de compacité de l'articulation, mais aussi pour des questions d'esthétique, le connecteur est généralement reçu entre deux flancs latéraux du balai qui sont reliés par la tige d'articulation. De la sorte, l'extrémité avant du bras doit elle aussi être reçue entre les flancs du bras, en avant du connecteur par rapport au balai pour permettre l'engagement du connecteur dans le crochet du bras.

Un tel montage, s'il présente des garanties de fiabilité, se révèle particulièrement délicat à effectuer et impose que le balai présente, en avant de la tige d'articulation, une ouverture aménagée dans un dos supérieur du balai pour permettre l'engagement de l'extrémité avant du bras. Une telle ouverture demeure au moins partiellement apparente après le montage du balai sur le bras.

Il a déjà été proposé une conception des moyens d'articulation du balai sur le bras qui permet un montage et un démontage aisé du balai, même par une personne non expérimentée. En effet, le propriétaire du véhicule est amené à changer régulièrement ses balais d'essuie-glace et il doit pouvoir procéder à cette opération de la manière la plus simple possible.

Par ailleurs, les essuie-glace étant des pièces apparentes à l'extérieur du véhicule, il est souhaitable de leur conférer un caractère esthétique, en évitant le plus possible toute discontinuité de forme.

Il a ainsi été proposé un essuie-glace du type décrit précédemment, dans lequel le connecteur comporte des moyens d'articulation qui sont portés par deux ailes longitudinales verticales parallèles entre lesquelles est reçu le balai, dans lequel les ailes sont écartées transversalement l'une de l'autre vers une position de montage pour permettre le montage articulé du connecteur sur le balai puis sont ramenées vers une position d'articulation dans laquelle les moyens d'articulation du connecteur coopèrent avec des moyens complémentaires du balai, et dans lequel les ailes du balai sont reçues entre deux flasques latéraux de l'extrémité du bras qui empêchent que les ailes du connecteur ne s'écartent transversalement de leur position d'articulation vers leur position de montage.

Le connecteur comporte un corps avant qui présente sensiblement une forme de U renversé en section transversale et qui chevauche le balai et dont les deux ailes se prolongent vers l'arrière.

Le connecteur est reçu à coulissement longitudinal dans l'extrémité avant du bras, et le connecteur comporte des moyens pour assurer son blocage selon la direction longitudinale par rapport au bras. A cet effet, les ailes du connecteur sont reçues à coulissement longitudinal chacune respectivement dans deux logements délimités par les faces internes en vis-à-vis des deux flasques latéraux de l'extrémité avant du bras et qui sont débouchants vers l'avant, et le connecteur est engagé longitudinalement d'avant en arrière entre les flasques latéraux.

L'extrémité avant du bras comporte un dos supérieur transversal qui réunit les deux flasques, le connecteur comporte une languette élastique qui s'étend horizontalement vers l'arrière depuis le corps avant auquel elle est liée par son extrémité avant formant une charnière d'axe horizontal, la languette s'étend en regard d'une face inférieure du dos de l'extrémité du bras, la languette comporte un bossage qui est reçu dans une lumière correspondante formée dans le dos supérieur du bras pour bloquer longitudinalement le connecteur par rapport au bras, et le bossage est susceptible d'être escamoté vers le bas par pivotement de la languette élastique pour libérer le blocage longitudinal du connecteur par rapport au bras.

En particulier le document FR-A-2.759.048 décrit un essuie-glace de véhicule automobile, dans lequel un élément de monture appartenant à un balai d'essuie-glace est articulé à l'extrémité longitudinale avant d'un bras d'essuie-glace, autour d'un axe transversal horizontal, par l'intermédiaire d'un connecteur qui est articulé sur l'élément de monture, et dans lequel
- le connecteur comporte des moyens d'articulation qui sont portés par deux ailes longitudinales verticales parallèles entre lesquelles est reçue une partie centrale d'articulation de l'élément de monture,
- le connecteur comporte un corps avant qui présente sensiblement une forme de U renversé en section transversale et qui chevauche la partie centrale d'articulation de l'élément de monture et dont les deux ailes se prolongent vers l'arrière par rapport au corps avant.
- le connecteur est reçu à coulissement longitudinal dans l'extrémité avant du bras, et
- le connecteur comporte des moyens pour assurer son blocage selon la direction longitudinale par rapport au bras.

L'invention concerne un perfectionnement à un essuie-glace de ce type permettant notamment de garantir que les différents composants demeurent au moins partiellement reliés entre eux en cas de rupture de différentes parties des moyens d'articulation du balai d'essuie-glace sur le bras d'essuie-glace.

Dans ce but, l'invention est caractérisé en ce que le connecteur comporte une tige de retenue qui s'étend verticalement avec jeu à travers un trou formé en vis-à-vis dans la partie centrale d'articulation de l'élément de monture et en ce que l'extrémité libre inférieure de la tige de retenue comporte un bec de retenue pour retenir verticalement avec jeu le connecteur par rapport à l'élément de monture.

Selon des modes de réalisation de l'invention :
- la tige de retenue est reçue avec jeu longitudinal dans ledit trou conformé en une fente verticale d'orientation longitudinale ;
- l'extrémité avant du bras comporte un dos supérieur transversal, le connecteur comporte une languette élastique qui s'étend horizontalement vers l'arrière depuis le corps avant auquel elle est liée par son extrémité avant formant une charnière d'axe horizontal, la languette s'étend en regard d'une face inférieure du dos de l'extrémité du bras, la languette comporte un bossage qui est reçu dans une lumière correspondante formée dans le dos supérieur du bras pour bloquer longitudinalement le connecteur par rapport au bras, et la tige de retenue s'étend verticalement à partir de la face inférieure de la languette du connecteur ;
- le bossage est susceptible d'être escamoté vers le bas par pivotement de la languette élastique pour libérer le blocage longitudinal du connecteur par rapport au bras ;
- l'extrémité avant du bras comporte une butée arrière qui, en position montée du bras sur le balai d'essuie-glace, s'étend en regard d'une surface de butée orientée vers l'avant et qui est formée en vis-à-vis sur une face latérale externe de l'élément de monture ;
- les ailes du connecteur sont reçues entre deux flasques latéraux de l'extrémité avant du bras, et ladite butée arrière est constituée par un bord arrière d'un flasque latéral ;
- la surface de butée orientée vers l'avant est un bord avant qui délimite longitudinalement une portion en relief de la face latérale externe de l'élément de monture ;
- ladite portion en relief est délimitée verticalement vers le haut par un bord supérieur d'orientation longitudinale et inclinée pour constituer une rampe de guidage de l'extrémité avant du bras lors du montage de ce dernier sur le connecteur;
- le connecteur est engagé longitudinalement d'avant en arrière entre les flasques latéraux de l'extrémité avant du bras d'essuie-glace;
- les ailes du connecteur sont écartées transversalement l'une de l'autre vers une position de montage pour permettre le montage articulé du connecteur sur la partie centrale d'articulation de l'élément de monture puis sont ramenées vers une position d'articulation dans laquelle les moyens d'articulation du connecteur coopèrent avec des moyens complémentaires de l'élément de monture, et les ailes de l'élément de monture du balai sont reçues entre deux flasques latéraux de l'extrémité du bras qui empêchent que les ailes du connecteur ne s'écartent transversalement de leur position d'articulation vers leur position de montage ;
- les ailes du connecteur comportent deux ergots sensiblement cylindriques d'axe horizontal qui s'étendent en direction l'un de l'autre depuis des faces en vis-à-vis des deux ailes, et qui sont destinés à être reçus dans des orifices correspondants des flancs de la partie centrale d'articulation de l'élément de monture lorsque les ailes sont en position d'articulation pour assurer le montage articulé du connecteur sur le balai.

D'autres caractéristiques et avantages de l'invention apparaîtront à la lecture de la description détaillée qui suit pour la compréhension de laquelle on se reportera aux dessins annexés dans lesquels :

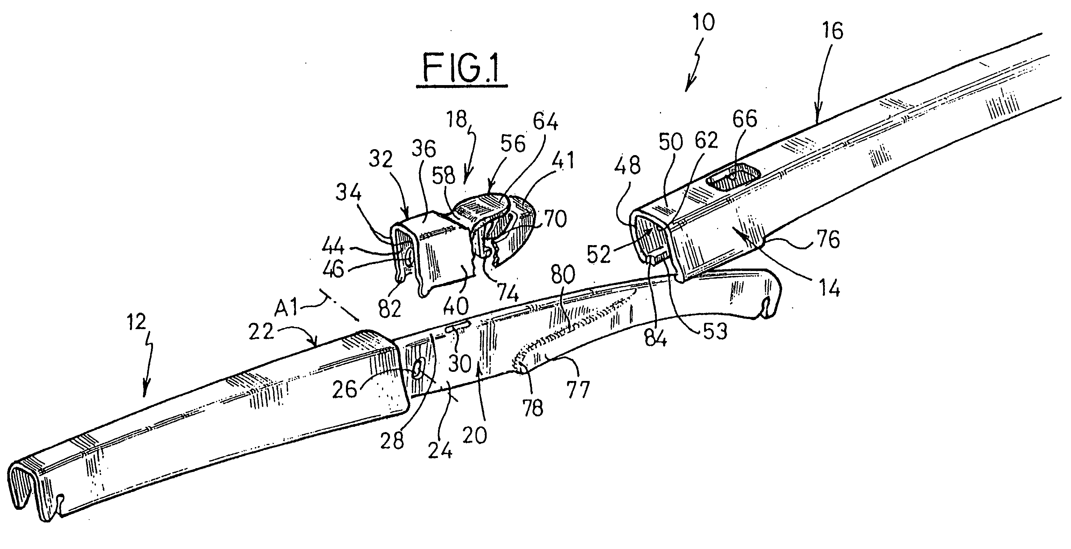

- la figure 1 est une vue en perspective éclatée des principaux composants d'un essuie-glace selon l'invention ;
- la figure 2 est une vue latérale de l'essuie-glace sur laquelle tous les composants de la figure 1 sont illustrés en position montée et assemblée ;
- la figure 3 est une vue en section, par un plan vertical médian de l'essuie-glace de la figure 2 ;
- la figure 4 est une vue extérieure similaire à celle de la figure 2 qui illustre l'extrémité avant du bras d'essuie-glace en cours de montage sur le connecteur ;
- la figure 5 est une vue similaire à celle de la figure 4 sur laquelle le bras d'essuie-glace est illustré en coupe longitudinale et dans une position précédente illustrant son guidage sur l'élément de monture ; et
- la figure 6 est une vue à plus grande échelle en section transversale de l'essuie-glace de la figure 2.

Dans la description qui va suivre, on utilisera, à titre non limitatif, les termes horizontal, vertical, supérieur, inférieur, avant, arrière, etc. en référence aux figures pour en faciliter la compréhension et la rédaction des revendications.

On a représenté sur les figures un essuie-glace 10 comportant un balai d'essuie-glace 12 qui est destiné à être monté articulé autour d'un axe transversal A1, horizontal en considérant les figures, à l'extrémité longitudinale avant 14 d'un bras d'essuie-glace 16.

L'essuie-glace présente une symétrie par rapport à un plan vertical et longitudinal médian P.

A cet effet, il est prévu un connecteur 18 qui est monté articulé sur une portion centrale d'articulation 20 d'un élément de monture en forme d'étrier principal 22 du balai 12 et qui est destiné à être fixé à l'extrémité avant 14 du bras 16.

Comme on peut le voir sur les figures, la partie centrale 20 d'articulation de l'élément de monture 22 comporte deux flancs latéraux longitudinaux 24 qui sont sensiblement parallèles et qui sont munis chacun d'un orifice sensiblement circulaire 26 d'axe A1. Les deux flancs 24 sont réunis par un dos supérieur 28 et une fente d'orientation longitudinale 30 est aménagée dans le dos supérieur 28 au niveau du connecteur 18.

Le connecteur 18 comporte un corps avant 32 qui présente en section transversale une forme de U renversé comportant deux branches latérales sensiblement verticales 34 et une branche transversale supérieure 36 sensiblement horizontale. Le corps avant 32 est destiné à chevaucher la partie centrale d'articulation 20 de l'élément de monture 22 du balai d'essuie-glace 12.

Depuis une face transversale arrière 38 du corps avant 32, deux ailes parallèles 40 s'étendent longitudinalement vers l'arrière dans le prolongement des branches verticales 34 du corps avant 32. Les ailes 40 se présentent sous la forme de plaques qui s'étendent dans un plan vertical et elles sont parallèles l'une à l'autre à l'état libre. Toutefois, il est possible, par déformation élastique, de les écarter transversalement l'une de l'autre avec les branches verticales 34.

Les ailes 40 sont reliées entre elles au voisinage de leurs extrémités arrière par un pont supérieur transversal 41 qui s'étend sensiblement dans le même plan horizontal que la branche transversale supérieure 36.

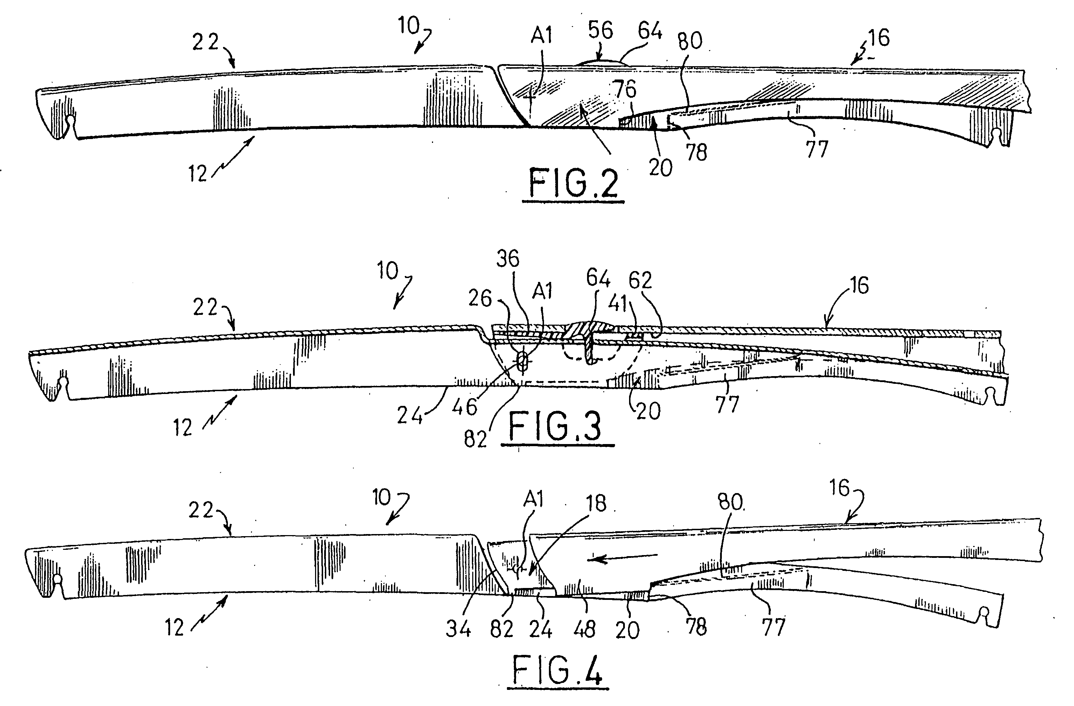

Les branches verticales 34 prolongées par les ailes 40 portent chacune, sur une face interne 44 tournée en direction de l'aile opposée (voir figure 4), un ergot cylindrique 46 qui s'étend transversalement selon l'axe A1 en direction de l'aile 40 opposée. A l'état libre, les faces internes 44 sont écartées l'une de l'autre d'une distance sensiblement égale à la largeur transversale de la portion centrale d'articulation 20 de l'élément de monture 22.

De la sorte, à l'état libre, les ergots cylindriques 46 sont susceptibles d'être reçus dans les orifices circulaires 26 des flancs 24.

Au contraire, lorsque les ailes 40 sont écartées transversalement l'une de l'autre (notamment par déformation élastique), les ergots 46 sont dégagés des orifices 26 de sorte que le connecteur 18 peut être engagé ou dégagé selon la direction verticale par rapport à l'élément de monture 22.

Bien entendu, on peut prévoir que les ergots soient portés par le balai 12 et qu'ils soient reçus dans des orifices aménagés dans les branches 34 du connecteur 18.

Il est à noter qu'il est prévu un espace suffisant entre le dos supérieur 28 de l'élément de monture 22 et la branche transversale supérieure 36 du corps avant 32 du connecteur 18 pour permettre un débattement en rotation suffisant du connecteur 18 par rapport au balai 12.

Les branches 34 prolongées par ailes 40 du connecteur 18 sont destinées à être reçues à l'intérieur de l'extrémité avant 14 du bras 16 de telle manière que l'extrémité 14 empêche tout écartement transversal des branches 34 prolongées par les ailes 40. Ainsi, lorsque le connecteur 18 est monté sur le balai 12 et qu'il est engagé dans l'extrémité avant 14 du bras 16, les ergots 46 ne peuvent plus être dégagés des orifices 26, ce qui empêche tout démontage du connecteur 18 par rapport au balai 12.

A cet effet, l'extrémité avant 14 du bras 16 comporte deux flasques longitudinaux sensiblement verticaux 48 qui sont réunis par un dos supérieur transversal 50 et entre lesquels les branches 34 prolongées par les ailes 40 du connecteur 18 sont destinées à être reçues.

Les flasques transversaux 48 délimitent intérieurement des logements opposés 52 en regard l'un de l'autre sensiblement de la même forme que les branches 34 prolongées par les ailes 40 de telle sorte que celles-ci puissent y être introduites longitudinalement d'avant en arrière. Les logements 52 sont délimités verticalement vers le bas par des rebords 53 qui s'étendent transversalement vers l'intérieur en empêchant ainsi tout mouvement du connecteur 18 autre qu'un simple coulissement longitudinal.

De préférence, l'extrémité avant 14 du bras 16 et l'élément de monture 22 sont conçus de telle manière que leurs faces latérales externes respectives soient agencées dans le prolongement l'une de l'autre pour assurer une continuité esthétique entre le bras 16, dont l'extrémité avant 14 masque le connecteur 18 lorsque ce dernier est reçu longitudinalement entre les flasques 48.

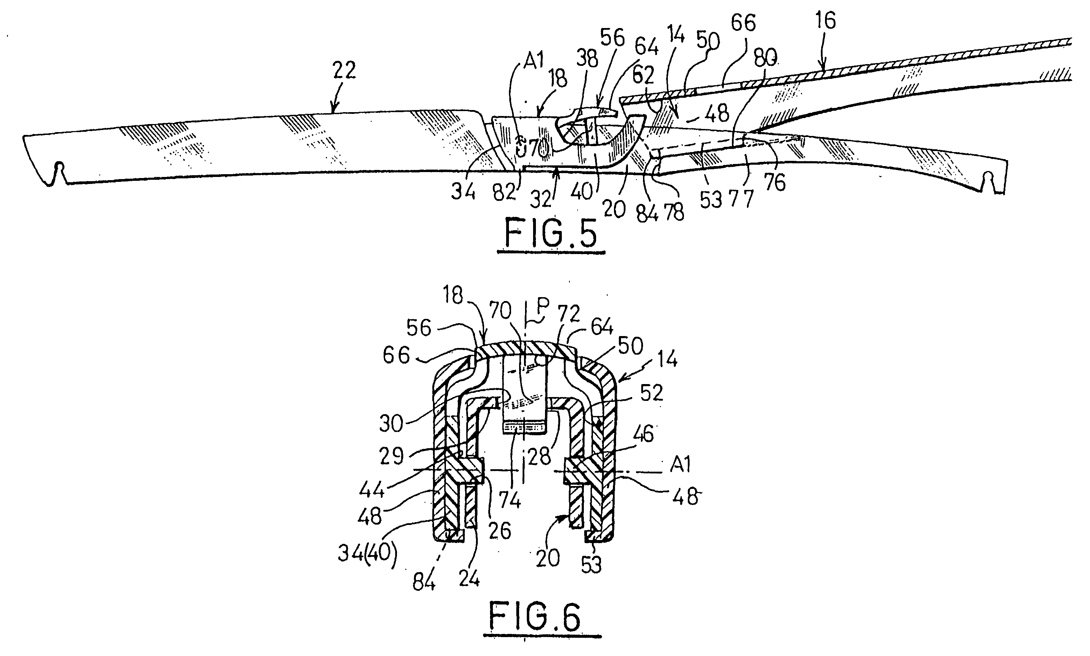

Comme on peut le voir sur la figure 5, lorsque le balai 12 est monté sur le bras 16, chaque branche 34 prolongée par une aile 40 du connecteur 18 est intercalée transversalement entre un flanc 24 de l'élément de monture 22 et un flasque 48 du bras 16, sans possibilité de mouvement et donc sans possibilité de désaccouplement de l'articulation.

On a par ailleurs prévu des moyens qui permettent de bloquer longitudinalement le connecteur 18 à l'intérieur de l'extrémité avant 14 du bras 16.

Avantageusement, ces moyens permettent un déblocage aisé en vue de permettre le remplacement du balai 12 lorsqu'il est usé.

A cet effet, le connecteur 18 comporte une languette 56 qui est par exemple réalisée sous la forme d'un élément de plaque horizontal, et qui s'étend longitudinalement vers l'arrière, sensiblement dans le prolongement de la branche transversale supérieure 36 du corps avant 32 du connecteur 18. L'extrémité avant 58 de la languette 56, forme une charnière d'axe sensiblement horizontal pour la languette 56.

Lorsque le connecteur 18 est engagé dans l'extrémité avant 14 du bras 16, une face supérieure 60 de la languette 56 est en regard d'une face inférieure 62 du dos supérieur transversal 50 de l'extrémité avant 14.

Sur cette face supérieure 60, la languette 56 comporte un bossage 64 qui est reçu dans une lumière 66 formée dans le dos supérieur 50 du bras 16 de manière à immobiliser longitudinalement le connecteur 18.

Toutefois, une surface supérieure 68 du bossage 64, qui dépasse à l'extérieur de l'extrémité 14 du bras 16, permet d'enfoncer le bossage 64 vers l'intérieur au travers de la lumière 66 en faisant pivoter la languette 56, à l'encontre de son élasticité, autour de son extrémité avant 58. Ainsi, il est possible de dégager le bossage 64 de la lumière 66, ce qui permet de retirer longitudinalement vers l'avant le connecteur 18 hors de l'extrémité avant 14 du bras d'essuie-glace 16.

L'assemblage de l'essuie-glace 10 comporte les étapes suivantes.

Le connecteur 18 est tout d'abord monté sur le balai 12 en écartant les ailes 40 du connecteur 18 transversalement l'une de l'autre de manière à pouvoir engager le connecteur 18 verticalement du haut vers le bas à cheval sur la portion centrale d'articulation 20 de l'élément de monture 22 du balai 12. Lorsque les ergots 46 des ailes 40 sont en regard des orifices 26, on relâche les ailes 40 de sorte que les ergots 46 s'engagent dans les orifices 26 et réalisent le montage articulé du connecteur 18 sur le balai 12.

Ensuite, l'ensemble du balai 12 et du connecteur 18 est engagé longitudinalement d'avant en arrière à l'intérieur de l'extrémité avant 14 du bras 16 de manière que les branches 34 prolongées par les ailes 40 du connecteur 18 soient reçues dans les logements 52 délimités par les flasques 48 de l'extrémité avant 14.

Durant cette opération, il est nécessaire d'effacer vers le bas le bossage 64. Cela peut être obtenu en donnant à la face supérieure 68 du bossage 64 une forme de rampe inclinée vers le bas et vers l'arrière.

Lorsque le bossage 64 arrive longitudinalement en regard de la lumière 66 du bras 16, la languette 56 reprend élastiquement sa position libre dans laquelle le bossage 64 est reçu dans la lumière 66, empêchant tout déplacement vers l'avant du connecteur 18, et donc du balai 12, par rapport au bras 16.

Conformément aux enseignements de l'invention, l'essuie-glace comporte des moyens pour en accroître la fiabilité d'utilisation, notamment en cas de rupture de certains éléments afin de maintenir le balai d'essuie-glace 12 sur le bras d'essuie-glace 14, 16.

Dans ce but, le connecteur 18 comporte une tige verticale de retenue 70 qui s'étend depuis la face inférieure 72 de la languette 56 en direction de la partie centrale d'articulation 20 de l'élément de monture 22 à l'intérieur de laquelle il s'étend à la faveur de la fente 30 ménagée dans le dos supérieur 28.

La tige de retenue 70 est reçue avec jeu longitudinal dans la fente 30 de manière à permettre, en usage normal, un fonctionnement sans interférence de la tige avec les éléments environnants.

L'extrémité libre inférieure 74 de la tige 70 est conformée en un bec ou crochet de retenue qui s'étend longitudinalement vers l'arrière en regard d'une portion de la face inférieure 29 du dos 28 mais avec un jeu vertical important de manière, en usage normal, à permettre un fonctionnement sans interférence du bec 74 de la tige 70 avec les éléments environnants.

Par ailleurs, chaque flasque 48 de l'extrémité avant 14 du bras d'essuie-glace 16 est délimité longitudinalement vers l'arrière par un bord de butée 76, d'orientation verticale qui, en position montée et assemblée du bras d'essuie-glace sur le connecteur 18 et sur le balai d'essuie-glace 12 s'étend en regard, avec un léger jeu longitudinal, d'un bord de butée appartenant à l'élément de monture 20.

Plus précisément, la face latérale externe de chaque flanc 24 de l'élément de monture 22 comporte une partie en relief 77 formant une surépaisseur qui est délimitée longitudinalement vers l'avant par un bord vertical avant de butée 78 et verticalement vers le haut par un bord supérieur 80 incliné par rapport à la direction longitudinale générale de l'élément de monture 22.

En cas de rupture du bouton poussoir 64, c'est-à-dire de la languette 56, l'élément de monture ne peut s'échapper longitudinalement hors du bras d'essuie-glace 16, 14 car les butées 76 coopèrent alors avec les butées 78.

La tige de retenue 70 du bouton 64 maintient aussi l'élément de monture 22 et elle empêche, grâce au bec de retenue 74, le bouton 64 et la languette 56 de s'échapper verticalement.

En cas de rupture des deux ergots 46, la tige de retenue 70, comme précédemment, retient l'élément de monture 22 longitudinalement et si la tige de retenue vient à casser, c'est la coopération des butées 76 et 78 qui intervient alors pour retenir l'élément de monture 22 para rapport au bras d'essuie-glace 16, 14.

La forme inclinée du bord supérieur 80 des surépaisseurs 77 assure, comme on peut le voir à la figure 5, une fonction de rampe de guidage de l'extrémité avant 16 du bras d'essuie-glace 14 de manière à positionner cette partie avant directement en concordance avec le connecteur 18 porté par l'élément de monture 22 pour faciliter le montage final du bras d'essuie-glace 14 sur le balai d'essuie-glace 12, 22.

De plus le bord supérieur 80 peut être légèrement incurvé convexe pour permettre le montage quelle que soit l'orientation angulaire du bras d'essuie-glace 14, 16 par rapport à l'élément de monture 22.

Par ailleurs, afin d'éviter en fonctionnement normal des efforts et des chocs répétés de la partie arrière du bouton 64 dans la fenêtre ou lumière 66, chaque branche verticale 34 du corps avant 32 du connecteur 18 comporte, à son extrémité inférieure avant, un ergot vertical 82 qui est reçu dans une encoche correspondante 84 formée à l'extrémité libre avant du rebord correspondant 53 du flasque 48 de l'extrémité avant 16 du bras d'essuie-glace 14.

## Revendications

1. Essuie-glace de véhicule automobile, dans lequel un élément de monture (22) appartenant à un balai d'essuie-glace (12) est articulé à l'extrémité longitudinale avant (14) d'un bras d'essuie-glace (16), autour d'un axe transversal horizontal (A1 ), par l'intermédiaire d'un connecteur (18) qui est articulé sur l'élément de monture (22), et dans lequel le connecteur (18)
- comporte des moyens d'articulation (46) qui sont portés par deux ailes (34, 40) longitudinales verticales parallèles entre lesquelles est reçue une partie centrale (20) d'articulation de l'élément de monture (22),
- comporte un corps avant (32) qui présente sensiblement une forme de U renversé en section transversale et qui chevauche la partie centrale d'articulation (20) de l'élément de monture (22) et dont les deux ailes (34, 40) se prolongent vers l'arrière par rapport au corps (32) avant,
- est reçu à coulissement longitudinal dans l'extrémité avant (14) du bras (16), et
- comporte des moyens pour assurer son blocage selon la direction longitudinale par rapport au bras (16), **caractérisé en ce que** le connecteur (18) comporte une tige (70) de retenue qui s'étend verticalement avec jeu à travers un trou (30) formé en vis-à-vis dans la partie centrale d'articulation (20) de l'élément de monture (22) et **en ce que** l'extrémité libre inférieure de la tige (70) de retenue comporte un bec de retenue pour retenir verticalement avec jeu le connecteur (18) par rapport à l'élément de monture (22).

2. Essuie-glace selon la revendication précédente, **caractérisé en ce que** la tige de retenue (70) est reçue avec jeu longitudinal (J) dans ledit trou conformé en une fente verticale (30) d'orientation longitudinale.

3. Essuie-glace selon t'une quelconque des revendications précédentes, **caractérisé en ce que** l'extrémité avant (14) du bras (16) comporte un dos supérieur transversal (50), **en ce que** le connecteur (18) comporte une languette élastique (56) qui s'étend horizontalement vers l'arrière depuis le corps avant (32) auquel elle est liée par son extrémité avant (58) formant une charnière d'axe horizontal, **en ce que** la languette (56) s'étend en regard d'une face inférieure (62) du dos (50) de l'extrémité (14) du bras (16), **en ce que** la languette (56) comporte un bossage (64) qui est reçu dans une lumière (66) correspondante formée dans le dos supérieur (50) du bras (16) pour bloquer longitudinalement le connecteur (18) par rapport au bras (16), et **en ce que** la tige de retenue (70) s'étend verticalement à partir de la face inférieure (72) de la languette (56) du connecteur (18).

4. Essuie-glace selon la revendication précédente, **caractérisé en ce que** le bossage (64) est susceptible d'être escamoté vers le bas par pivotement de la languette (56) élastique pour libérer le blocage longitudinal du connecteur (18) par rapport au bras (16).

5. Essuie-glace selon l'une quelconque des revendications précédentes, **caractérisé en ce que** l'extrémité avant (14) du bras (16) comporte une butée arrière qui, en position montée du bras (16) sur le balai d'essuie-glace, s'étend en regard d'une surface de butée orientée vers l'avant et qui est formée en vis-à-vis sur une face latérale externe (77) de l'élément de monture (22).

6. Essuie-glace selon la revendication précédente, **caractérisé en ce que** les ailes (34, 40) du connecteur (18) sont reçues entre deux flasques latéraux (48) de l'extrémité avant (14) du bras (16), et **en ce que** ladite butée arrière est constituée par un bord arrière d'un flasque latéral (48).

7. Essuie-glace selon la revendication 6, **caractérisé en ce que** la surface de butée orientée vers l'avant est un bord avant qui délimite longitudinalement une portion en relief de la face latérale externe (77) de l'élément de monture (22).

8. Essuie-glace selon la revendication précédente, **caractérisé en ce que** ladite portion en relief est délimitée verticalement vers le haut par un bord supérieur d'orientation longitudinale et inclinée pour constituer une rampe de guidage de l'extrémité avant (14) du bras (16) lors du montage de ce dernier sur le connecteur.

9. Essuie-glace selon l'une quelconque des revendications 6 à 8, **caractérisé en ce que** le connecteur (18) est engagé longitudinalement d'avant en arrière entre les flasques latéraux (48) de l'extrémité avant (14) du bras d'essuie-glace (16).

10. Essuie-glace selon l'une quelconque des revendications précédentes, **caractérisé en ce que** les ailes (34, 40) du connecteur sont écartées transversalement l'une de l'autre vers une position de montage pour permettre le montage articulé du connecteur (18) sur la partie centrale (20) d'articulation de l'élément de monture (22) puis sont ramenées vers une position d'articulation dans laquelle les moyens d'articulation (46) du connecteur (18) coopèrent avec des moyens complémentaires (26) de l'élément de monture (22), et **en ce que** les ailes (34, 40) de l'élément de monture du balai (12) sont reçues entre deux flasques latéraux (48) de l'extrémité (14) du bras (16) qui empêchent que les ailes (34, 40) du connecteur (18) ne s'écartent transversalement de leur position d'articulation vers leur position de montage.

11. Essuie-glace selon l'une quelconque des revendications précédentes, **caractérisé en ce que** les ailes (34, 40) du connecteur (18) comportent deux ergots (46) sensiblement cylindriques d'axe horizontal (A1 ) qui s'étendent en direction l'un de l'autre depuis des faces (44) en vis-à-vis des deux ailes (34, 40), et qui sont destinés à être reçus dans des orifices (26) correspondants des flancs (24) de la partie centrale (20) d'articulation de l'élément de monture (22) lorsque les ailes (34, 40) sont en position d'articulation pour assurer le montage articulé du connecteur (18) sur le balai (12).

## Patentansprüche

1. Scheibenwischer für ein Kraftfahrzeug, in dem ein zu einem Scheibenwischerblatt (12) gehörendes Trägerelement (22) am vorderen länglichen Ende (14) eines Scheibenwischerarms (16) um eine transversale horizontale Achse (A1) mittels eines Verbindungsglieds (18) artikuliert ist, das auf einem Trägerelement (22) artikuliert ist, in dem das Verbindungsglied (18)
- Artikulationsmittel (46) umfasst, die durch zwei längliche, vertikale, parallele Flügel (34, 40) getragen werden, zwischen denen ein zentraler Artikulationsteil (20) des Trägerelements (22) aufgenommen wird,
- einen vorderen Körper (32) umfasst, der im Querschnitt wesentlich eine umgekehrte U-Form aufweist und der den zentralen Artikulationsteil (20) des Trägerelements (22) überlappt und dessen beide Flügel (34, 40) sich im Verhältnis zum vorderen Körper (32) nach hinten verlängern,
- in Längsrichtung gleitend im vorderen Ende (14) des Arms (16) aufgenommen wird und
- Mittel zur Gewährleistung seiner Blockierung gemäß der Längsrichtung im Verhältnis zum Arm (16) umfasst, **dadurch gekennzeichnet, dass** das Verbindungsglied (18) einen Rückhaltestift (70) umfasst, der sich vertikal mit Spiel durch ein Loch (30) gegenüber dem zentralen Artikulationsteil (20) des Trägerelements (22) erstreckt und dass das freie untere Ende des Rückhaltestifts (70) eine Rückhalteschnauze zum vertikalen Zurückhalten mit Spiel des Verbindungsglieds (18) im Verhältnis zum Trägerelement (22) umfasst.

2. Scheibenwischer gemäß dem vorherigen Anspruch, **dadurch gekennzeichnet, dass** der Rückhaltestift (70) mit Spiel in Längsrichtung (J) in dem genannten, als vertikalen Schlitz (30) länglicher Ausrichtung angepassten Loch aufgenommen wird.

3. Scheibenwischer gemäß einem der vorherigen Ansprüche, **dadurch gekennzeichnet, dass** das vordere Ende (14) des Arms (16) einen transversalen oberen Rücken (50) umfasst, dass das Verbindungsglied (18) eine elastische Zunge (56) umfasst, die sich vom vorderen Körper (32), mit dem sie durch ihr ein Scharnier horizontaler Achse bildendes vorderes Ende (58) verbunden ist, horizontal nach hinten erstreckt, dass die Zunge (56) sich gegenüber einer unteren Seite (62) des Rückens (50) des Endes (14) des Arms (16) erstreckt, dass die Zunge (66) einen Höcker (64) umfasst, der in einer entsprechenden, im oberen Rücken (50) des Arms (16) zur Blockierung in Längsrichtung des Verbindungsglieds (18) im Verhältnis zum Arm (16) gebildeten Öffnung (66) aufgenommen wird und dass der Rückhaltestift (70) sich vertikal ab der unteren Seite (72) der Zunge (56) des Verbindungsglieds (18) erstreckt.

4. Scheibenwischer gemäß dem vorherigen Anspruch, **dadurch gekennzeichnet, dass** der Höcker (64) durch Schwenken der elastischen Zunge (56) nach unten zur Lösung der Blockierung in Längsrichtung des Verbindungsglieds (18) im Verhältnis des Arms (16) eingezogen werden kann.

5. Scheibenwischer gemäß einem der vorherigen Ansprüche, **dadurch gekennzeichnet, dass** das vordere Ende (14) des Arms (19) einen hinteren Anschluss umfasst, der sich in montierter Position des Arms (16) auf dem Scheibenwischerblatt gegenüber einer nach vorn ausgerichteten Anschlagsfläche erstreckt und der gegenüber einer lateralen äußeren Seite (77) des Trägerelements (22) gebildet wird.

6. Scheibenwischer gemäß dem vorherigen Anspruch, **dadurch gekennzeichnet, dass** die Flügel (34, 40) des Verbindungsglieds (18) zwischen zwei lateralen Flanschen (48) des vorderen Endes (14) des Arms (16) aufgenommen werden und dass der genannte hintere Anschlag durch einen hinteren Rand eines lateralen Flansches (48) gebildet wird.

7. Scheibenwischer gemäß Anspruch 6, **dadurch gekennzeichnet, dass** der nach vorn ausgerichtete Anschlag ein vorderer Rand ist, der in Längsrichtung einen Reliefabschnitt der lateralen äußeren Seite (77) des Trägerelements (22) begrenzt.

8. Scheibenwischer gemäß dem vorherigen Anspruch, **dadurch gekennzeichnet, dass** der genannte Reliefabschnitt vertikal nach oben durch einen oberen und zur Bildung einer Führungsrampe des vorderen Endes (14) des Arms (16) bei der Anbringung des letzteren auf dem Verbindungsglied geneigten Rand länglicher Ausrichtung begrenzt wird.

9. Scheibenwischer gemäß Anspruch 6 bis 8, **dadurch gekennzeichnet, dass** das Verbindungsglied (18) in Längsrichtung von vorne nach hinten zwischen den lateralen Flanschen (48) des vorderen Endes (14) des Scheibenwischerarms (16) eingreift.

10. Scheibenwischer gemäß einem der vorherigen Ansprüche, **dadurch gekennzeichnet, dass** die Flügel (34, 40) des Verbindungsglieds transversal voneinander in Richtung einer Anbringungsposition hin beabstandet sind, um die artikulierte Anbringung des Verbindungsglieds (18) auf dem zentralen Artikulationsteil (20) des Trägerelements (22) zu erlauben, dann in Richtung einer Artikulationsposition zurückgebracht werden, in der die Artikulationsmittel (46) des Verbindungsglieds (18) mit den komplementären Mitteln (26) des Trägerelements (22) zusammenwirken, und dass die Flügel (34, 40) des Trägerelements des Wischblattes (12) zwischen zwei lateralen Flanschen (48) des Endes (14) des Arms (16) aufgenommen werden, die verhindern, dass die Flügel (34, 40) des verbindungsglieds (18) sich transversal von ihrer Artikulationsposition in Richtung ihrer Anbringungsposition entfernen.

11. Scheibenwischer gemäß einem der vorherigen Ansprüche, **dadurch gekennzeichnet, dass** die Flügel (34, 40) des Verbindungsglieds (18) zwei wesentlich zylindrische Vorsprünge (46) horizontaler Achse (A1) umfassen, die sich in Richtung zueinander von den Seiten (44) gegenüber den beiden Flügeln (34, 40) erstrecken und die dazu bestimmt sind, in entsprechenden Aussparungen (26) der Flanken (24) des zentralen Artikulationsteils (20) des Trägerelements (22) aufgenommen zu werden, wenn die Flügel (34, 40) sich in Artikulationsposition befinden, um die artikulierte Anbringung des Verbindungsglieds (18) auf dem Wischblatt (12) zu gewährleisten.

## Claims

1. A motor vehicle wiper, in which a mounting element (22) belonging to a wiper blade (12) is articulated at the front longitudinal end (14) of a wiper arm (16), about a horizontal transverse axis (A1), by means of a connector (18) which is articulated on the mounting element (22), and in which the connector (18)
- comprises articulation means (46) which are carried by two parallel vertical longitudinal wings (34, 40) between which a central articulation part (20) of the mounting element (22) is received,
- comprises a front body (32) which has substantially the shape of an inverted U in transverse section and which straddles the central articulation part (20) of the mounting element (22) and whose two wings (34, 40) are extended rearwards with respect to the front body (32),
- is received for longitudinal sliding in the front end (14) of the arm (16), and
- comprises means for providing its locking in the longitudinal direction with respect to the arm (16), **characterised in that** the connector (18) comprises a retaining rod (70) which extends vertically with clearance through a hole (30) formed opposite in the central articulation part (20) of the mounting element (22) and **in that** the bottom free end of the retaining rod (70) comprises a retaining beak for vertically retaining the connector (18) with respect to the mounting element (22) with clearance.

2. A wiper according to the preceding claim, **characterised in that** the retaining rod (70) is received with longitudinal clearance (J) in the said hole shaped as a vertical slot (30) of longitudinal orientation.

3. A wiper according to any one of the preceding claims, **characterised in that** the front end (14) of the arm (16) has a transverse top web (50), **in that** the connector (18) has an elastic tongue (56) which extends horizontally towards the rear from the front body (32) to which it is connected by its front end (58) forming a hinge of horizontal axis, **in that** the tongue (56) extends opposite a bottom face (62) of the web (50) of the end (14) of the arm (16), **in that** the tongue (56) has a protrusion (64) which is received in a corresponding aperture (66) formed in the top web (50) of the arm (16) in order to lock the connector (18) longitudinally with respect to the arm (16), and **in that** the retaining rod (70) extends vertically from the bottom face (72) of the tongue (56) of the connector (18) .

4. A wiper according to the preceding claim, **characterised in that** the protrusion (64) is able to be retracted downwards by pivoting of the elastic tongue (56) in order to release the longitudinal locking of the connector (18) with respect to the arm (16).

5. A wiper according to the any one of the preceding claims, **characterised in that** the front end (14) of the arm (16) comprises a rear stop which, in the mounted position of the arm (16) on the wiper blade, extends opposite a stop surface oriented forwards on which is formed opposite an external lateral face (77) of the mounting element (22).

6. A wiper according to the preceding claim, **characterised in that** the wings (34, 40) of the connector (18) are received between two lateral flanges (48) of the front end (14) of the arm (16), and **in that** the said rear stop is formed by a rear edge of a lateral flange (48).

7. A wiper according to Claim 6, **characterised in that** the stop surface oriented forwards is a front edge which longitudinally delimits a portion in relief of the external lateral face (77) of the mounting element (22) .

8. A wiper according to the preceding claim, **characterised in that** said portion in relief is delimited vertically upwards by a longitudinally oriented top edge and inclined so as to constitute a ramp for guidance of the front end (14) of the arm (16) when the latter is mounted on the connector.

9. A wiper according to any one of Claims 6 to 8, **characterised in that** the connector (18) is engaged longitudinally from front to rear between the lateral flanges (48) of the front end (14) of the wiper arm (16) .

10. A wiper according to any one of the preceding claims, **characterised in that** the wings (34, 40) of the connector are separated transversely from one another towards a mounting position to allow the articulated mounting of the connector (18) on the central articulation part (20) of the mounting element (22) and are then returned to an articulation position in which the articulation means (46) of the connector (18) cooperate with complementary means (26) of the mounting element (22), and **in that** the wings (34, 40) of the mounting element of the blade (12) are received between two lateral flanges (48) of the end (14) of the arm (16) which prevent the wings (34, 40) of the connector (18) separating transversely from their articulation position to their mounting position.

11. A wiper according to any one of the preceding claims, **characterised in that** the wings (34, 40) of the connector (18) comprise two substantially cylindrical lugs (46) of horizontal axis (A1) which extend in the direction of one another from opposite faces (44) of the two wings (34, 40) and which are intended to be received in corresponding orifices (26) in the flanks (24) of the central articulation part (20) of the mounting element (22) when the wings (34, 40) are in articulation position in order to ensure the articulated mounting of the connector (18) on the blade (12) .
